# EUROPEAN PATENT SPECIFICATION

(11) **EP 4 354 341 B1**
(45) Date of publication and mention of the grant of the patent: **03.12.2025**
(21) Application number: 22382960.7
(22) Date of filing: 10.10.2022
(51) Int. Cl.: G06K 19/06

(54) **METHODS FOR MANUFACTURING A MAGNETIC STRIPE OF A CARD-LIKE DATA CARRIER**
VERFAHREN ZUR HERSTELLUNG EINES MAGNETSTREIFENS EINES KARTENFÖRMIGEN DATENTRÄGERS
PROCÉDÉS DE FABRICATION D'UNE BANDE MAGNÉTIQUE D'UN SUPPORT DE DONNÉES DE TYPE CARTE

(43) Date of publication of application: 17.04.2024
(73) Proprietor: Giesecke+Devrient ePayments GmbH, 81677 München (DE)
(72) Inventor: Tarantino, Thomas, 81677 München (DE); Fernandez Lopez, Oscar Miguel, E-08820 El Prat de Llobregat (Barcelona) (ES)
(74) Representative: LKGLOBAL Lorenz & Kopf Patentanwalt Attorney at Law PartG mbB

(56) References cited:
- WO-A2-01/18745
- WO-A2-01/26030
- WO-A2-2012/071182
- CH-A5- 688 293
- GB-A- 1 373 856
- US-A1- 2007 257 107
- US-B1- 7 156 301
- CLAUS EBNER ED - KEITH E MAYES AND KONSTANTINOS MARKANTONAKIS: "CHAPTER 2: Smart Card Production Environment", 1 January 2008, SMART CARDS, TOKENS, SECURITY AND APPLICATIONS, SPRINGER US, PAGE(S) 27 - 50, ISBN: 978-0-387-72197-2, XP001525432
- "Security elements, and methods and apparatus for their manufacture ED - Darl Kuhn", IP.COM, IP.COM INC., WEST HENRIETTA, NY, US, 29 March 2011 (2011-03-29), XP013144544, ISSN: 1533-0001

## Description

### Technical Field

The disclosure generally relates to the manufacture of magnetic stripes for data carrier cards, such as credit cards, smart cards, identification cards etc. In particular, the invention relates to methods for manufacturing a magnetic stripe of a card-like data carrier.

### Technical Background

Data carrier cards are used in various different applications. For example, bank cards like credit cards are used as payment cards which allow a user of the bank card to pay for purchased goods or services. Such data carrier cards often include a magnetic stripe and are therefore also known as magnetic stripe cards which are operable to store data by modifying a magnetism of magnetic particles which may be present in the form of a band of magnetic material on the card. This magnetic band or stripe can be read by swiping it past a magnetic reading device, for example a magnetic reading device of an automated teller machine (ATM) or cash machine. A further example for a data carrier card is an identification (ID) card which stores user-related data. Currently known manufacturing techniques for providing the magnetic stripe onto the card element of a data carrier card may be inefficient, in particular in terms of material usage and/or production times.

US 2007/257107 discloses a computer readable universal authorization card system including a card having a computer readable portion for conducting communications over a global network and a magnetic stripe for interfacing with card readers. The magnetic stripe has a stripe length and a stripe width, the card has a card length and a card width, and the stripe length is shorter than the card length.

Claus Ebner et. al., "CHAPTER 2: Smart Card Production Environment", 1 January 2008, SMART CARDS, TOKENS, SECURITY AND APPLICATIONS, SPRINGER US, XP001525432, ISBN: 978-0-387-72197-2, discloses manufacturing card bodies using lamination. Thermoplastic foils are pressed together under high temperatures to establish a connection. A stack of foils including a magnetic stripe is put between heating plate pairs in a laminator. Depending on the necessary process parameters the layers are heated for a certain time and a under certain pressures.

WO 2012/071182 A2 discloses a card design and manufacturing method to produce thin gage, open loop system cards, such as credit cards, debit cards, prepaid cards, financial cards, and payroll cards. The thin gage card structure may vary between 5-15 mils in thickness on a one ply plastic material. The majority of manufacturing steps can be performed on a rotary press in a single operation. Card personalization can be accomplished on a high-speed machine using ink jet for all variable information imaged on both the front and back, and accompanied by high speed encoding of magnetic stripe or activation of integrated circuit elements utilized in the electronic payment process.

CH 688 293 A5 discloses a card incorporating a magnetic layer within a card section defined via a window in a layer with a non-slip outer surface, e.g. of silicon, applied to a carrier layer via a printing process. The magnetic layer can be applied to the card only in the region of the window, by transfer from a continuous carrier strip coated with the magnetic material, using a heated pressure roller.

GB 1 373 856 A discloses a laminated magnetically codable card having a layer of copolymerized vinyl chloride and acetate and a strip of a magnetic recording tape of compatible vinyl material extending thereacross integrally bonded to the layer and with the exposed surface flush with the surface of the layer. The card can comprise an opaque core having transparent outer layers, all made of the vinyl copolymer. The magnetic tape can be of polyvinylchloride having a magnetic oxide coating. An array of cards may be formed on a stock sheet having a dull matt surface by applying stripes of a solvent therefor, e.g. a ketone, with a roller pressing the magnetic tapes on the thus-treated areas, fusing the tape to the layer, e.g. at 135-150 °C. and 400 psi, and ensuring a flush finish by employing smooth pressure plates and cutting the cards from the sheet.

"Security elements, and methods and apparatus for their manufacture ", Darl Kuhn, IP.COM, IP.COM INC., WEST HENRIETTA, NY, US, 29 March 2011, P013144544, ISSN: 1533-0001, discloses an apparatus for magnetically imprinting indicia into a layer on an article. The layer comprises a composition in which magnetic or magnetisable particles are suspended. The apparatus comprises a soft magnetisable sheet, having an outer surface arranged to face the article in use, and an opposing interior surface; and a permanent magnet, shaped such that its magnetic field contains perturbations giving rise to indicia, the permanent magnet being disposed adjacent the interior surface of the soft magnetisable sheet. The soft magnetisable sheet enhances the perturbations of the magnetic field of the permanent magnet such that when the layer to be imprinted is located adjacent the outer surface of the soft magnetisable sheet, the magnetic or magnetisable particles are oriented by the magnetic field to display the indicia.

WO 01/26030 A2 discloses a method for making a credit card comprising a magnetic strip that includes the steps of depositing a magnetic recording layer on a substrate, cutting the substrate into strips, and mounting the strips onto the credit card. The strips can comprise glass that is sufficiently thin to be bendable. The magnetic recording layer is sputtered onto the glass using a high temperature sputtering apparatus. Alternatively, the substrate can be a metal foil.

WO 01/18745 A2 discloses a method for producing an opaque, transparent or translucent transaction card having multiple features, such as a holographic foil, integrated circuit chip, silver magnetic stripe with text on the magnetic stripe, opacity gradient, an invisible optically recognizable compound, a translucent signature field such that the signature on back of the card is visible from the front of the card and an active expiration date on the front of the card. The invisible optically recognizable compound can be an infrared film, which can be detected by a sensor found in an ATM or card assembly line.

US 7 156 301 B1 discloses an RFID fob system comprising a foldable RFID fob having a folded state and an unfolded state. The foldable RFID fob comprises a first section and a second section. The system further comprises a hinge disposed between the first and the second section. The foldable RFID fob has at least one dimension smaller than a corresponding dimension of a traditionally-sized fob when the foldable RFID fob is in the unfolded state. The system further comprises a holder for holding the fob wherein said holder is a housing that surrounds the fob when the fob is in the folded state. The housing comprises a first section and a second section, wherein a hinge is disposed between the first and second sections of the housing, and wherein folding said holder causes the fob to fold.

### Summary

It may be seen as an object of the invention to provide improved methods for manufacturing magnetic stripes for card-like data carriers.

Various methods according to the features of the independent claims are provided. Further embodiments are evident from the dependent claims and from the following description.

According to an aspect, a method for manufacturing a magnetic stripe of a card-like data carrier is provided. In a step of the method, a card element having a card element surface is provided. In a further step, a stamping element is provided spaced apart from the card element surface. In a further step, a magnetic stripe material layer is arranged between the card element surface and the stamping element. The magnetic stripe material layer is also arranged between a carrier substrate layer and a heat-activatable substrate layer. In yet a further step, at least a portion of the magnetic stripe material layer is pressed against the card element surface using the stamping element. In a further step, a heat amount is applied onto the portion of the magnetic stripe material layer using the stamping element, when pressing the portion of the magnetic stripe material layer against the card element surface. Pressing the portion of the magnetic stripe material layer against the card element surface generates a magnetic stripe on the card element surface such that the resulting magnetic stripe has a stripe length that is less than a length of the card element surface and has a stripe width that is less than a width of the card element surface. Pressing the portion of the magnetic stripe material layer against the card element surface comprises pressing the portion of the magnetic stripe material layer together with a portion of the carrier substrate layer and a portion of the heat-activatable substrate layer towards the card element surface.

With this inventive method, it is possible to provide a magnetic stripe on the card element which does not extend over the entire surface of the card element. In particular, it may be sufficient to provide the required information or data with the magnetic stripe even if the magnetic stripe has a reduced length and thus only partially extends over the upper or lower surface of the card element or card-like data carrier. For example, in order to be able to read a credit card and obtain all required information, an ATM might only need a few centimeters of magnetic stripe starting from the card edge, but not extending over the entire length of the card surface.

Therefore, the inventive methods described herein provide improved techniques for manufacturing magnetic stripes having a reduced length on the card-like data carrier.

The first method for manufacturing the magnetic stripe of the card-like data carrier described herein employs a stamping element that may be configured to stamp the magnetic stripe material onto the card element surface while a heat amount is applied onto the magnetic stripe material and/or a surface portion of the card element surface where the magnetic stripe material will be applied. In particular, the card element may represent the uppermost or lowermost layer of the card-like data carrier to be manufactured. Therefore, the card element may comprise a card-like structure or a foil-like structure which may be applied to a base structure of the card-like data carrier, as will be further explained below.

The stamping element is spaced apart from the card element surface and the magnetic stripe material layer is arranged between the card element surface and the stamping element. Afterwards, the stamping element may be moved towards the card element surface such that a stamping surface of the stamping element presses a portion of the magnetic stripe material layer onto the card element surface, i.e., the stamping element may exert a stamping force that pushes some of the magnetic material layer against a portion of the card element surface. This portion of the card element surface may only be a part of the card element surface where the magnetic stripe material layer is applied and where the magnetic stripe will be located after the manufacturing process. The stamping element may then be moved away from the card element surface and, afterwards, the card element may be moved relative to the stamping element such that the stamping element surface faces another portion of the same card element surface of said card element or a portion of a new card element surface of another card element.

It is noted that a heat amount is applied onto the portion of the magnetic stripe material layer using the stamping element, when pressing the portion of the magnetic stripe material layer against the card element surface. In particular, a temperature in a region around said portion of magnetic stripe material layer can be increased to facilitate attaching the portion of the magnetic stripe material layer onto the card element surface. The heat may be provided via the stamping element itself, for example via the stamping element surface, and transferred into the magnetic stripe material layer.

As explained above, the portion of the magnetic stripe material layer may be applied onto the card element surface, thereby generating the final shape of the magnetic stripe on the card element surface. In particular, the portion of the magnetic stripe may be applied to the card element surface such that the stripe length does not extend over the entire card element length, but rather extends only over a part of the card element length. The final magnetic stripe may also have a specified width that does also not extend over the entire width of the card element. In other words, the manufactured magnetic stripe is limited in its dimensions to only a smaller part within the card element surface.

According to an embodiment, pressing the portion of the magnetic stripe material layer against the card element surface comprises pressing only the portion of the magnetic stripe material layer that faces a stamping surface of the stamping element.

It is possible that the stamping surface comprises a planar surface with a surface area that is smaller than a surface area of the provided magnetic stripe material layer. Accordingly, when pressing the stamping surface against the magnetic stripe material layer and thus pressing the magnetic stripe material layer against the card element surface, only the portion of the magnetic stripe material layer will be stamped and pressed against the card element surface that is currently located between the stamping element surface and the card element surface. That is, the magnetic stripe will only be applied in a surface area on the card element surface where there was a pressing of magnetic stripe material layer. It is therefore possible that the magnetic stripe material layer will not be applied onto the card element surface in regions where the stamping element did not press the magnetic stripe material layer against the card element surface.

According to an embodiment, applying the heat amount onto the portion of the magnetic stripe material layer may comprise activating the portion of the heat-activatable substrate layer using the stamping element, thereby providing an adhesion or adhesion force between the portion of the magnetic stripe material layer and the card element surface, which may attach the resulting magnetic stripe to the card element.

For example, the magnetic stripe material layer may be sandwiched between the carrier substrate layer and the heat-activatable substrate layer. In particular, the magnetic stripe material layer may be coated on one side with the heat-activatable substrate layer. The carrier substrate layer may act as a carrier, protection or form stabilizer for the magnetic stripe material layer and/or the heat-activatable substrate layer may act as an adhesive for attaching the magnetic stripe material layer to the card element surface when being activated. In particular, the heat-activatable substrate layer may be activated by the heat amount provided by the stamping element. The heat may thus be transferred via the magnetic stripe material layer to the heat-activatable substrate layer, at least when the stamping element presses the magnetic stripe material layer. It is possible that the carrier substrate layer will vanish during or shortly after the pressing step. The heat-activatable substrate layer, when being activated, may change its material characteristics. For example, the heat-activatable substrate layer will undergo a curing or hardening process which attaches the portion of the magnetic stripe material layer onto the card element surface.

According to an embodiment, the card element is a cover layer of the card-like data carrier, wherein the method further comprises providing a base structure comprising one or more structural base layers and applying, e.g., attaching or bonding, the card element to the base structure before or after pressing the portion of the magnetic stripe material layer against the card element surface.

That is, the card element may only be an uppermost or lowermost layer of the final card-like data carrier. For example, the card element may be a transparent outer layer or foil, herein also referred to as overlay, that covers the inner base structure of the card-like data carrier. It is possible that the above-described step of pressing the portion of the magnetic stripe material layer is performed in the presence of the card element only, wherein the base structure is not yet present. In this case, the overlay including the applied magnetic stripe may be attached to the base structure afterwards. However, in contrast, it is also possible that the above-described step of pressing the portion of the magnetic stripe material layer is carried out when the overlay is already attached to the base structure.

According to another aspect, a method for manufacturing a magnetic stripe of a card-like data carrier is provided. In a step of the method, a card element having a card element surface is provided. In a further step, a roller element is arranged spaced apart from the card element surface, wherein the roller element comprises a plurality of functional elements spaced apart from each other around a circumference of the roller element. In a further step, a magnetic stripe material layer is arranged between the card element surface and the roller element. In a further step, the magnetic stripe material layer is arranged between a carrier substrate layer and a heat-activatable substrate layer. In a further step, the roller element is rotated relative to the card element surface and relative to the magnetic stripe material layer. In yet a further step, at least a first portion of the magnetic stripe material layer is pressed against the card element surface using a first functional element of the plurality of functional elements, when rotating the roller element. In a further step, a heat amount is applied onto the first portion of the magnetic stripe material layer using the roller element, when pressing the first portion of the magnetic stripe material layer against the card element surface. Pressing the first portion of the magnetic stripe material layer against the card element surface generates a first magnetic stripe on the card element surface such that the first magnetic stripe has a stripe length that is less than a length of the card element surface and has a stripe width that is less than a width of the card element surface. Pressing the first portion of the magnetic stripe material layer against the card element surface comprises pressing the first portion of the magnetic stripe material layer together with a first portion of the carrier substrate layer and a first portion of the heat-activatable substrate layer towards the card element surface. Applying the heat amount onto the first portion of the magnetic stripe material layer comprises activating the first portion of the heat-activatable substrate layer using the roller element, thereby providing an adhesion between the first portion of the magnetic stripe material layer and the card element surface.

With this alternative inventive method, it is possible to provide a magnetic stripe on the card element which does not extend over the entire surface of the card element. This second method for manufacturing the magnetic stripe of the card-like data carrier described herein employs a roller element that may be configured to press the magnetic stripe material onto the card element surface at discrete and/or spatially separated surface portions. Simultaneously, a heat amount may be applied onto the magnetic stripe material and/or onto surface portions of the card element surface where the magnetic stripe material will currently be applied.

The roller element is spaced apart from the card element surface and the magnetic stripe material layer is arranged between the card element surface and the roller element. Afterwards, the roller element may be rotated relative to the card element surface and relative to the magnetic stripe material layer. The functional elements which are spaced apart from each other in a circumferential direction of the roller element may comprise or constitute multiple stamping elements, such as the stamping element described above with respect to the first method. In particular, the functional elements may be in the form of protrusions or blocks on the outer perimeter of the roller element. The rotation of the roller element may thus functionally cooperate with pressing the first functional element against the first portion of the magnetic stripe material layer and towards the card element surface. In particular, when rotating the roller element, there will be a specified orientation of the roller element where the first functional element directly faces the magnetic stripe material layer, i.e., the first functional element may lie on an axis which extends through the center of the roller element and which is perpendicular with respect to the card element surface. In this orientation, the first functional element may press the first portion of the magnetic stripe material layer against the card element surface since the first portion of the magnetic stripe material layer is directly positioned between the first functional element and the card element surface.

It is noted that a heat amount is applied onto the first portion of the magnetic stripe material layer using the roller element, for example the functional element that currently presses the portion of the magnetic stripe material layer against the card element surface. In particular, a temperature in a region around said portion of the magnetic stripe material layer can be increased to facilitate attaching the portion of the magnetic stripe material layer onto the card element surface. The heat may be provided via the roller element itself, for example via the functional elements, and transferred into the respective portions of the magnetic stripe material layer.

As explained above, the first portion of the magnetic stripe material layer may be applied onto the card element surface, thereby generating the final shape of the magnetic stripe on the card element surface. In particular, the first portion of the magnetic stripe material layer may be applied to the card element surface such that the stripe length does not extend over the entire card element length, but rather extends only over a part of the card element length. The final magnetic stripe may also have a specified width that does also not extend over the entire width of the card element. In other words, the manufactured magnetic stripe is again limited in its dimensions to only a smaller part within the card element surface.

The characteristics and functions of the carrier substrate layer and of the heat-activatable substrate layer as described above with respect to the first method may also apply to the carrier substrate layer and to the heat-activatable substrate layer as implemented by the second method.

According to an embodiment, the method further comprises pressing at least a second portion of the magnetic stripe material layer against the card element surface using a second functional element of the plurality of functional elements, when further rotating the roller element, and applying a heat amount onto the second portion of the magnetic stripe material layer using the roller element, when pressing the second portion of the magnetic stripe material layer against the card element surface.

Since the first and second functional elements are circumferentially spaced apart on the roller element, these functional elements will subsequently or consecutively be in an orientation relative to the magnetic stripe material layer in which said functional elements are able to press the respective portions of the magnetic stripe material layer against the card element surface. In particular, the first functional element may press the first portion of the magnetic stripe material layer against the card element surface timely before the second functional element presses the second portion of the magnetic stripe material layer against the card element surface.

According to an embodiment, pressing the second portion of the magnetic stripe material layer against the card element surface generates a second magnetic stripe on the card element surface such that the second magnetic stripe has a stripe length that is less than a length of the card element surface and has a stripe width that is less than a width of the card element surface.

Therefore, the dimensional characteristics of the generated first magnetic stripe may also apply for the dimensional characteristics of the generated second magnetic stripe.

According to an embodiment, the first magnetic stripe and the second magnetic stripe are generated on the card element surface such that the first magnetic stripe and the second magnetic stripe are spaced apart from each other on the card element surface by a predetermined distance that corresponds to a circumferential distance between the functional elements on the roller element.

In other words, the circumferential distance of the functional elements on the roller element may be adjusted or chosen which determines the final distance between the generated magnetic stripes of the card element surface. The following may apply: The larger the circumferential distance between the functional elements on the roller element, the larger the distance between the generated magnetic stripes of the card element surface.

According to an embodiment, the card element is a cover layer of the card-like data carrier, wherein the method further comprises providing a base structure comprising one or more structural base layers and applying, e.g., attaching or bonding, the card element to the base structure before or after pressing the first portion of the magnetic stripe material layer against the card element surface.

The above explanations with respect to the card element of the first method as well as its treatment modalities within the first method may also apply to the card element as used by the second method.

According to another aspect, a method for manufacturing a magnetic stripe of a card-like data carrier is provided. In a step of the method, a card element having a card element surface is provided. In another step, a silkscreen print element is arranged relative to the card element surface. In another step, a magnetic stripe material is printed onto the card element surface using the silkscreen print element, wherein printing the magnetic stripe material onto the card element surface generates a magnetic stripe on the card element surface such that the magnetic stripe has a stripe length that is less than a length of the card element surface and has a stripe width that is less than a width of the card element surface. A stencil is used to define a shape of magnetic stripe on the card element surface. The stencil is adapted to prevent the magnetic stripe material being applied to certain regions on the card element surface.

With this alternative inventive method, it is also possible to provide a magnetic stripe on the card element which does not extend over the entire surface of the card element.

This third method for manufacturing the magnetic stripe of the card-like data carrier described herein employs a silkscreen print element that may be configured to print the magnetic stripe material onto the card element surface. The card element may represent the uppermost layer of the card-like data carrier to be manufactured. Therefore, the card element may comprise a card-like structure or a foil like structure which may be applied to a base structure of the card-like data carrier as described herein.

The silkscreen print element, for example a blade or similar component, may be arranged adjacent the card element surface such that the magnetic stripe material can be applied onto the card element surface via the silkscreen print element. A screen may be used to define a shape of magnetic stripe or a pattern of magnetic stripes on the card element surface. The screen may be adapted to prevent the magnetic stripe material being applied to certain regions on the card element surface. The magnetic stripe material may be present in the form of a solid material, a liquid material or as particulate matter or powder, when being applied onto the card element surface.

As explained above, the magnetic stripe material may be applied onto the card element surface, thereby generating the final shape of the magnetic stripe on the card element surface. In particular, the magnetic stripe material may be applied to the card element surface such that the stripe length does not extend over the entire card element length, but rather extends only over a part of the card element length. The final magnetic stripe may also have a specified width that does also not extend over the entire width of the card element. In other words, the manufactured magnetic stripe is limited in its dimensions to only a smaller part within the card element surface.

According to an embodiment, the card element is a cover layer of the card-like data carrier, wherein the method further comprises providing a base structure comprising one or more structural base layers and applying, e.g., attaching or bonding, the card element to the base structure before or after printing the magnetic stripe material onto the card element surface, thereby providing a laminated structure of at least the card element and the base structure.

The card element may only be an uppermost or lowermost layer of the final card-like data carrier. For example, the card element may be a transparent outer layer or foil, herein also referred to as overlay, that covers the inner base structure of the of the card-like data carrier. It is possible that the above-described step of applying the magnetic stripe material is performed in the presence of the card element only, wherein the base structure is not yet present. In this case, the overlay including the applied magnetic stripe may be attached to the base structure afterwards. However, in contrast, it is also possible that the above-described step of applying the magnetic stripe material is carried out when the overlay is already attached to the base structure.

According to an embodiment, the method further comprises cutting the laminated structure to a predetermined size in order to provide the card-like data carrier.

That is, the magnetic stripe material may be printed on the overlay and during the card manufacturing process it may be applied to other foil layers of the base structure. In a further step, all foils may be laminated and the card-like data carrier is cut into shape, e.g., punched out, from a laminated sheet that comprises the base structure and the card element. The short magnetic stripe will then be present on the final card-like data carrier.

According to another aspect, a method for manufacturing a magnetic stripe of a card-like data carrier is provided. In a step of the method, a card element having a card element surface is provided. In another step, a tape application element is arranged relative to the card element surface. In another step, a tape element that at least comprises a magnetic stripe material layer is provided. In yet another step, the tape element including the magnetic stripe material layer is attached to the card element surface using the tape application element. Attaching the tape element including the magnetic stripe material layer onto the card element surface generates a magnetic stripe on the card element surface such that the resulting magnetic stripe has a stripe length that is less than a length of the card element surface and has a stripe width that is less than a width of the card element surface.

With this alternative inventive method, it is possible to provide a magnetic stripe on the card element which does not extend over the entire surface of the card element. This fourth method for manufacturing the magnetic stripe of the card-like data carrier described herein employs a tape application element that may be configured to print the magnetic stripe material, for example on a carrier tape, onto the card element surface. In other words, the magnetic stripe material layer can be provided on a carrier tape and can be applied to the surface of the card element like a sticker. The tape application element may be a sticker application machine or label application machine.

As explained above, the magnetic stripe material layer may be applied onto the card element surface, thereby generating the final shape of the magnetic stripe on the card element surface. In particular, the tape element including the magnetic stripe material layer is applied to the card element surface such that the resulting stripe length does not extend over the entire card element length, but rather extends only over a part of the card element length. The final magnetic stripe may also have a specified width that does also not extend over the entire width of the card element. In other words, the manufactured magnetic stripe is limited in its dimensions to only a smaller part within the card element surface.

Attaching the tape element including the magnetic stripe material layer onto the card element surface comprises providing an adhesion between the magnetic stripe material layer and the card element surface.

For example, the magnetic stripe material layer may be applied onto the card element surface like a sticker having an adhesive for providing an adhesive force which attaches the magnetic stripe material layer to the card element surface.

As can be derived from the above explanations, various methods can be used to provide the magnetic stripe on the card element, wherein the resulting magnetic stripe, in either direction, does not extend over the entire surface of the card element. Therefore, the inventive methods provide alternative solutions for improving the manufacturing of magnetic stripes for card-like data carriers.

The above explanations with respect to the different methods as well as their different treatment modalities can be freely combined with each other if technically reasonable.

### Brief description of the drawings

The present invention will hereinafter be described in conjunction with the following drawing figures, wherein like numerals denote like elements, and wherein:
- Fig. 1: shows a flow diagram of a method for manufacturing a magnetic stripe of a card-like data carrier.
- Fig. 2: shows a card-like data carrier with a magnetic stripe.
- Fig. 3: shows a layer composition used for manufacturing a magnetic stripe of a card-like data carrier.
- Fig. 4: shows a stamping element for manufacturing a magnetic stripe of a card-like data carrier.
- Fig. 5: shows a flow diagram of another method for manufacturing a magnetic stripe of a card-like data carrier.
- Fig. 6: shows a roller element for manufacturing a magnetic stripe of a card-like data carrier.
- Fig. 7: shows a flow diagram of another method for manufacturing a magnetic stripe of a card-like data carrier.
- Fig. 8: shows a flow diagram of another method for manufacturing a magnetic stripe of a card-like data carrier.

### Detailed description of exemplary embodiments

The representations and illustrations in the drawings may be schematic and not to scale. A better understanding of the method and system described above may be obtained through a review of the shown illustrations together with a review of the detailed description that follows.

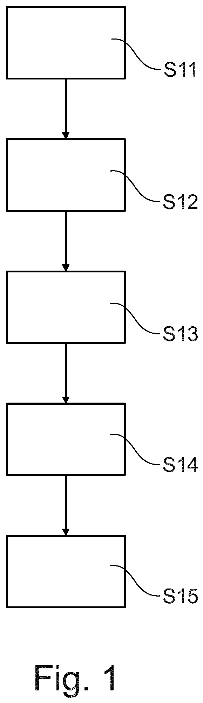

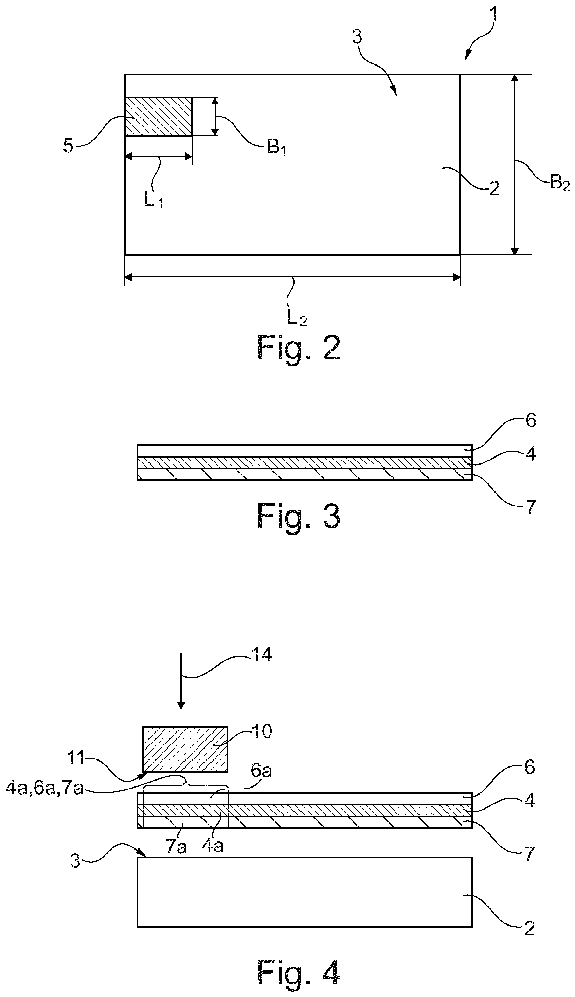

Fig. 1 shows a flow diagram of a method for manufacturing a magnetic stripe of a card-like data carrier, for example the magnetic stripe 5 of the card-like data carrier 1 as shown in Fig. 2. In a step S11, the method comprises providing a card element having a card element surface. In a step S12, the method comprises arranging a stamping element spaced apart from the card element surface. In a step S13, the method comprises arranging a magnetic stripe material layer between the card element surface and the stamping element. In a step S14, the method comprises pressing a portion of the magnetic stripe material layer against the card element surface using the stamping element. In a step S15, the method comprises applying a heat amount onto at least the portion of the magnetic stripe material layer using the stamping element, when pressing the portion of the magnetic stripe material layer against the card element surface. Pressing the portion of the magnetic stripe material layer against the card element surface generates a magnetic stripe on the card element surface such that the magnetic stripe has a stripe length that is less than a length of the card element surface and has a stripe width that is less than a width of the card element surface. In an example, the method steps are performed in the indicated order.

Fig. 2 shows a card-like data carrier 1 having a magnetic stripe 5 applied thereto by means of one of the various methods described herein. In particular, the methods as described herein enable improved manufacturing techniques to apply the magnetic stripe 5 onto the card element surface 3 of the card element 2. As can be seen in Fig. 2, the magnetic stripe 5 has a reduced length L₁. This means that a magnetic stripe material layer, which is further explained below, can be pressed against the card element surface 3 to generate the magnetic stripe 5 on the card element surface 3 such that the magnetic stripe 5 has a stripe length L₁ that is less than a length L₂ of the card element surface 3 and has a stripe width B₁ that is less than a width B₂ of the card element surface 3.

In other words, the inventive methods described herein can apply a portion of magnetic stripe material layer onto the card element surface 3, thereby generating the final shape of the magnetic stripe 5 on the card element surface 3 as, for instance, illustrated in Fig. 1. In particular, a portion of the magnetic stripe material may be applied to the card element surface 3 such that the stripe length L₁ does not extend over the entire card element length L₂, but rather extends only over a part of the card element length L₂. The final magnetic stripe 5 may also have a specified width B₁ that does also not extend over the entire width B₂ of the card element 2. In other words, the manufactured magnetic stripe 5 is limited in its dimensions to only a smaller part or area within the card element surface 3. It is noted that the ends or edges of the card element 2 or the card-like data carrier 1 may define the card element length L₂ and the card element width B₂, respectively. In the illustrated example, the card element 2 has four edges, wherein, in a length direction, the magnetic stripe 5 starts at a first edge and ends at a specified distance before reaching a second edge that is oppositely located to the first edge. In a width direction, the magnetic stripe 5 starts at a specified distance away from a third edge and ends at a specified distance before reaching a fourth edge that is oppositely located to the third edge. Other configurations may be possible. For example, the magnetic stripe 5 may be generated such that it is spaced apart by specified distances from all four edges.

Fig. 3 shows a layer composition or layer stack used for manufacturing a magnetic stripe 5 of a card-like data carrier 1, for example the magnetic stripe 5 of the card-like data carrier 1 as shown in Fig. 2. A magnetic stripe material layer 4 is arranged between a carrier substrate layer 6 and a heat-activatable substrate layer 7. In particular, the magnetic stripe material layer 4 may be sandwiched between the carrier substrate layer 6 and the heat-activatable substrate layer 7. The carrier substrate layer 6 may act as a carrier, protection or form stabilizer for the magnetic stripe material layer 4 and the heat-activatable substrate layer 7 may act as an adhesive for attaching the magnetic stripe material layer 4 to the card element surface when being activated. The heat-activatable substrate layer 7 may be a hot melt.

Fig. 4 shows a stamping element 10 for manufacturing the magnetic stripe 5 of the card-like data carrier 1 as shown in Fig. 2. As described with respect to the method of Fig. 1, a portion 4a of the magnetic stripe material layer 4 can be pressed against the card element surface 3 which comprises pressing or pushing the portion 4a of the magnetic stripe material layer 4 together with a portion 6a of the carrier substrate layer 6 and a portion 7a of the heat-activatable substrate layer 7 towards the card element surface 3. The direction 14 of the stamping element 10 during the pressing procedure is indicated by an arrow in Fig. 4. Simultaneously, heat can be applied onto the portion 4a of the magnetic stripe material layer 4 and also the portion 7a of the heat-activatable substrate layer 7, such that the portion 7a of the heat-activatable substrate layer 7 can be activated by the heat transferred from the stamping element 10. The activation of the portion 7a of the heat-activatable substrate layer 7 during the pressing procedure provides an adhesion generated between the portion 4a of the magnetic stripe material layer 4 and the card element surface 3 of the card element 2 in order to finally attach the magnetic stripe 5 as shown in Fig. 2 above.

In view of Fig. 4, it may be noted that the layer composition or layer stack of the layers 4, 6 and 7 may laterally extend beyond the portions 4a, 6a and 7a of these layers 4, 6 and 7 that are actually pressed against the card element surface 3. Accordingly, pressing the portion 4a of the magnetic stripe material layer 4 against the card element surface 3 may comprise pressing only the portion 4a of the larger magnetic stripe material layer 4 that faces a stamping surface 11 of the stamping element 10.

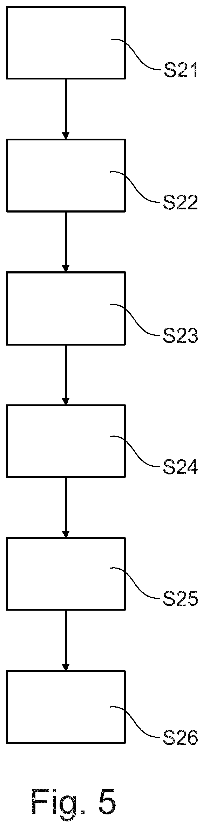

Fig. 5 shows a flow diagram of another method for manufacturing a magnetic stripe of a card-like data carrier, for example the magnetic stripe 5 of the card-like data carrier 1 as shown in Fig. 2. In a step S21, the method comprises providing a card element having a card element surface. In a step S22, the method comprises arranging a roller element spaced apart from the card element surface, wherein the roller element comprises a plurality of functional elements, herein also referred to as roller segments, spaced apart from each other around a circumference of the roller element. In a step S23, the method comprises arranging a magnetic stripe material layer between the card element surface and the roller element. In a step S24, the method comprises rotating the roller element relative to the card element surface and relative to the magnetic stripe material layer. In a step S25, the method comprises pressing a first portion of the magnetic stripe material layer against the card element surface using a first functional element of the plurality of functional elements, when rotating the roller element. In a step S26, the method comprises applying a heat amount onto the first portion of the magnetic stripe material layer using the roller element, when pressing the first portion of the magnetic stripe material layer against the card element surface. Pressing the first portion of the magnetic stripe material layer against the card element surface generates a first magnetic stripe on the card element surface such that the first magnetic stripe has a stripe length that is less than a length of the card element surface and has a stripe width that is less than a width of the card element surface. In an example, the method steps are performed in the indicated order.

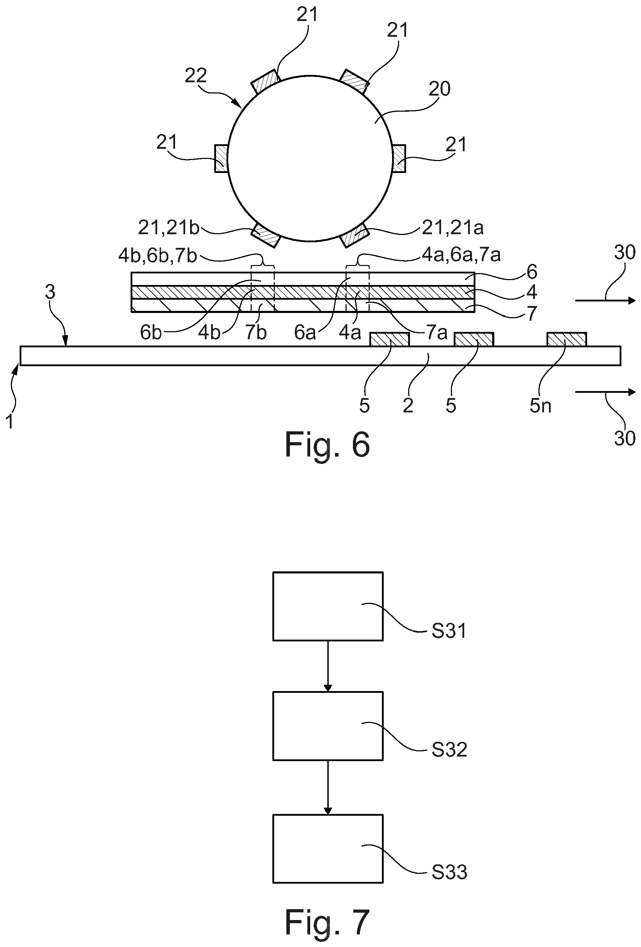

Fig. 6 shows a roller element 20 for manufacturing a magnetic stripe of a card-like data carrier, for example the magnetic stripe 5 of the card-like data carrier 1 as shown in Fig. 2. A card element 2 comprises a card element surface 3 and is arranged paced apart from the roller element 20. The roller element 20 comprises a plurality of functional elements 21, for example stamp elements or stamp segments, being spaced apart from each other around a circumference 22 or perimeter 22 of the roller element 20. Furthermore, at least the magnetic stripe material layer 4 is placed between the card element surface 3 and the roller element 20. The roller element 20 may be configured to press a first portion 4a of the magnetic stripe material layer 4 against the card element surface 3 using a first functional element 21a of the plurality of functional elements 21, when rotating the roller element 20. In addition, a heat amount can be applied onto the first portion 4a of the magnetic stripe material layer 4 using the roller element 20, e.g., using the first functional element 21a, when pressing the first portion 4a of the magnetic stripe material layer 4 against the card element surface 3. Afterwards, a second portion 4b of the magnetic stripe material layer 4 can be pressed against the card element surface 3 using a second functional element 21b of the plurality of functional elements 21, when further rotating the roller element 20. Accordingly, a heat amount can also be transferred onto the second portion 4b of the magnetic stripe material layer 4 using the roller element 20, e.g., using the first functional element 21a, when pressing the second portion 4b of the magnetic stripe material layer 4 against the card element surface 3.

Since the first and second functional elements 21a, 21b are circumferentially spaced apart on the roller element 20, these functional elements 21a, 21b will, at respective times, subsequently be in an orientation relative to the magnetic stripe material layer 4 in which these functional elements 21a, 21b can press the respective portions 4a, 4b of the magnetic stripe material layer 4 against the card element surface 3. In particular, the first functional element 21a may press the first portion 4a of the magnetic stripe material layer 4 against the card element surface 3 timely before the second functional element 21b presses the second portion 4b of the magnetic stripe material layer 4 against the card element surface 3.

As can also be derived from Fig. 6, a composition or stack of the magnetic stripe material layer 4, a carrier substrate layer 6 and a heat-activatable substrate layer 7 can be provided in the same manner as described above with respect to Fig. 3. Pressing the first portion 4a of the magnetic stripe material layer 4 against the card element surface 3 may thus comprise pressing, by the first functional element 21a, the first portion 4a of the magnetic stripe material layer 4 together with a first portion 6a of the carrier substrate layer 6 and a first portion 7a of the heat-activatable substrate layer 7 towards the card element surface 3. Afterwards, i.e., after further rotating the roller element 20, the second functional element 21b can press the second portion 4b of the magnetic stripe material layer 4 together with a second portion 6b of the carrier substrate layer 6 and a second portion 7b of the heat-activatable substrate layer 7 towards the card element surface 3. During the rotation of the roller element 20, the layers 4, 6 and 7 and/or the processed card element 2 can be moved in a direction 30 as indicated by arrows in Fig. 6.

The pressing by the first functional element 21a may result in a first magnetic stripe 5 on the card element surface 3, wherein this first magnetic stripe 5 has a stripe length that is less than a length of the card element surface 3 and has a stripe width that is less than a width of the card element surface 3, similar as shown in Fig. 2. The pressing by the second functional element 21b may result in a second magnetic stripe 5 on the card element surface 3, wherein this second magnetic stripe 5 also has a stripe length that is less than a length of the card element surface 3 and has a stripe width that is less than a width of the card element surface 3, similar as shown in Fig. 2. The first magnetic stripe 5 and the second magnetic stripe 5 may be generated on the card element surface 3 such that the first magnetic stripe 5 and the second magnetic stripe 5 are spaced apart from each other on the card element surface 3 by a predetermined distance, as shown in Fig. 6, wherein the predetermined distance corresponds to a circumferential distance between the functional elements 21 on the roller element 20. In the same manner, a plurality of further magnetic stripes 5n can be applied to the card element surface 3.

Fig. 7 shows a flow diagram of another method for manufacturing a magnetic stripe of a card-like data carrier, for example the magnetic stripe 5 of the card-like data carrier 1 as shown in Fig. 2. In a step S31, the method comprises providing a card element having a card element surface. In another step S32, the method comprises arranging a silkscreen print element relative to the card element surface. In another step S32, the method comprises printing a magnetic stripe material onto the card element surface using the silkscreen print element. Printing the magnetic stripe material onto the card element surface generates a magnetic stripe on the card element surface such that the magnetic stripe has a stripe length that is less than a length of the card element surface and has a stripe width that is less than a width of the card element surface. In an example, the method steps are performed in the indicated order.

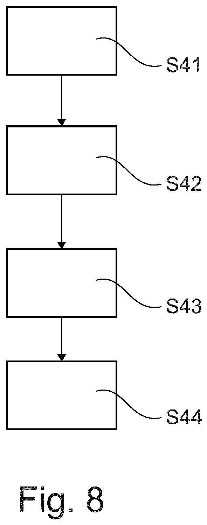

Fig. 8 shows a flow diagram of another method for manufacturing a magnetic stripe of a card-like data carrier, for example the magnetic stripe 5 of the card-like data carrier 1 as shown in Fig. 2. In a step S41, the method comprises providing a card element having a card element surface. In another step S42, the method comprises arranging a tape application element relative to the card element surface. In a step S43, the method comprises providing a tape element that at least comprises a magnetic stripe material layer. In a step S44, the method comprises attaching the tape element including the magnetic stripe material layer onto the card element surface using the tape application element. Attaching the tape element including the magnetic stripe material layer onto the card element surface generates a magnetic stripe on the card element surface such that the magnetic stripe has a stripe length that is less than a length of the card element surface and has a stripe width that is less than a width of the card element surface. In an example, the method steps are performed in the indicated order.

## Claims

1. A method for manufacturing a magnetic stripe (5) of a card-like data carrier (1), comprising:
providing a card element (2) having a card element surface (3, S11);
arranging a stamping element (10) spaced apart from the card element surface (3, S12);
arranging a magnetic stripe material layer (4) between the card element surface (3) and the stamping element (10, S13);
arranging the magnetic stripe material layer (4) between a carrier substrate layer (6) and a heat-activatable substrate layer (7);
pressing at least a portion (4a) of the magnetic stripe material layer (4) against the card element surface (3) using the stamping element (10, S14);
applying a heat amount onto the portion (4a) of the magnetic stripe material layer (4) using the stamping element (10), when pressing the portion (4a) of the magnetic stripe material layer (4) against the card element surface (3, S15);
wherein pressing the portion (4a) of the magnetic stripe material layer (4) against the card element surface (3) generates a magnetic stripe (5) on the card element surface (3) such that the magnetic stripe (5) has a stripe length (L₁) that is less than a length (L₂) of the card element surface (3) and has a stripe width (B₁) that is less than a width (B₂) of the card element surface (3), and
wherein pressing the portion (4a) of the magnetic stripe material layer (4) against the card element surface (3) comprises pressing the portion (4a) of the magnetic stripe material layer (4) together with a portion (6a) of the carrier substrate layer (6) and a portion (7a) of the heat-activatable substrate layer (7) towards the card element surface (3).

2. The method of claim 1,
wherein pressing the portion (4a) of the magnetic stripe material layer (4) against the card element surface (3) comprises pressing only the portion (4a) of the magnetic stripe material layer (4) that faces a stamping surface (11) of the stamping element (10).

3. The method of any one of claims 1 or 2,
wherein applying the heat amount onto the portion (4a) of the magnetic stripe material layer (4) comprises activating the portion (7a) of the heat-activatable substrate layer (7) using the stamping element (10), thereby providing an adhesion between the portion (4a) of the magnetic stripe material layer (4) and the card element surface (3).

4. The method of any one of claims 1 to 3,
wherein the card element (2) is a cover layer of the card-like data carrier (1);
further comprising:
providing a base structure comprising one or more structural base layers;
applying the card element (2) to the base structure before or after pressing the portion (4a) of the magnetic stripe material layer (4) against the card element surface (3).

5. A method for manufacturing a magnetic stripe (5) of a card-like data carrier (1), comprising:
providing a card element (2) having a card element surface (3, S21);
arranging a roller element (20) spaced apart from the card element surface (3), wherein the roller element (20) comprises a plurality of functional elements (21) spaced apart from each other around a circumference (22) of the roller element (20, S22);
arranging a magnetic stripe material layer (4) between the card element surface (3) and the roller element (20, S23);
arranging the magnetic stripe material layer (4) between a carrier substrate layer (6) and a heat-activatable substrate layer (7);
rotating the roller element (20) relative to the card element surface (3) and relative to the magnetic stripe material layer (4, S24);
pressing at least a first portion (4a) of the magnetic stripe material layer (4) against the card element surface (3) using a first functional element (21a) of the plurality of functional elements (21), when rotating the roller element (20, S25);
applying a heat amount onto the first portion (4a) of the magnetic stripe material layer (4) using the roller element (20), when pressing the first portion (4a) of the magnetic stripe material layer (4) against the card element surface (3, S26);
wherein pressing the first portion (4a) of the magnetic stripe material layer (4) against the card element surface (3) generates a first magnetic stripe (5) on the card element surface (3) such that the first magnetic stripe (5) has a stripe length (L₁) that is less than a length (L₂) of the card element surface (3) and has a stripe width (B₁) that is less than a width (B₂) of the card element surface (3), and
wherein pressing the first portion (4a) of the magnetic stripe material layer (4) against the card element surface (3) comprises pressing the first portion (4a) of the magnetic stripe material layer (4) together with a first portion (6a) of the carrier substrate layer (6) and a first portion (7a) of the heat-activatable substrate layer (7) towards the card element surface (3), and
wherein applying the heat amount onto the first portion (4a) of the magnetic stripe material layer (4) comprises activating the first portion (7a) of the heat-activatable substrate layer (7) using the roller element (20), thereby providing an adhesion between the first portion (4a) of the magnetic stripe material layer (4) and the card element surface (3).

6. The method of claim 5, further comprising:
pressing at least a second portion (4b) of the magnetic stripe material layer (4) against the card element surface (3) using a second functional element (21b) of the plurality of functional elements (21), when further rotating the roller element (20); and/or
applying a heat amount onto the second portion (4b) of the magnetic stripe material layer (4) using the roller element (20), when pressing the second portion (4b) of the magnetic stripe material layer (4) against the card element surface (3).

7. The method of claim 6,
wherein pressing the second portion (4b) of the magnetic stripe material layer (4) against the card element surface (3) generates a second magnetic stripe on the card element surface (3) such that the second magnetic stripe has a stripe length (L₁) that is less than a length (L₂) of the card element surface (3) and has a stripe width (B₁) that is less than a width (B₁) of the card element surface (3).

8. The method of claim 7,
wherein the first magnetic stripe (5) and the second magnetic stripe (5) are generated on the card element surface (3) such that the first magnetic stripe (5) and the second magnetic stripe (5) are spaced apart from each other on the card element surface (3) by a predetermined distance that corresponds to a circumferential distance between the functional elements (21) on the roller element (20).

9. The method of any one of claims 5 to 8,
wherein the card element (2) is a cover layer of the card-like data carrier (1);
further comprising:
providing a base structure comprising one or more structural base layers;
applying the card element (2) to the base structure before or after pressing the first portion (4a) of the magnetic stripe material layer (4) against the card element surface (3).

10. A method for manufacturing a magnetic stripe (5) of a card-like data carrier (1), comprising:
providing a card element (2) having a card element surface (3, S31);
arranging a silkscreen print element relative to the card element surface (3, S32);
printing a magnetic stripe material (4) onto the card element surface (3) using the silkscreen print element (S33);
wherein printing the magnetic stripe material (4) onto the card element surface (3) generates a magnetic stripe (5) on the card element surface (3) such that the magnetic stripe (5) has a stripe length (L₁) that is less than a length (L₂) of the card element surface (3) and has a stripe width (B₁) that is less than a width (B₂) of the card element surface (3),
wherein a stencil is used to define a shape of magnetic stripe (5) on the card element surface (3), and
wherein the stencil is adapted to prevent the magnetic stripe material (4) being applied to certain regions on the card element surface (3).

11. The method of claim 10,
wherein the card element (2) is a cover layer of the card-like data carrier (1);
further comprising:
providing a base structure comprising one or more structural base layers;
applying the card element (2) to the base structure before or after printing the magnetic stripe material (4) onto the card element surface (3), thereby providing a laminated structure of at least the card element (2) and the base structure.

12. The method of claim 11,
cutting the laminated structure to a predetermined size in order to provide the card-like data carrier (1).

13. A method for manufacturing a magnetic stripe (5) of a card-like data carrier (1), comprising:
providing a card element (2) having a card element surface (3, S41);
arranging a tape application element relative to the card element surface (3, S42);
providing a tape element that at least comprises a magnetic stripe material layer (4, S43);
attaching the tape element including the magnetic stripe material layer (4) onto the card element surface (3) using the tape application element (S44);
wherein attaching the tape element including the magnetic stripe material layer (4) onto the card element surface (3) generates a magnetic stripe (5) on the card element surface (3) such that the magnetic stripe (5) has a stripe length (L₁) that is less than a length (L₂) of the card element surface (3) and has a stripe width (B₁) that is less than a width (B₂) of the card element surface (3),
wherein attaching the tape element including the magnetic stripe material layer (4) onto the card element surface (3) comprises providing an adhesion between the magnetic stripe material layer (4) and the card element surface (3).

## Patentansprüche

1. Verfahren zum Herstellen eines Magnetstreifens (5) eines kartenartigen Datenträgers (1), umfassend:
Bereitstellen eines Kartenelements (2) mit einer Kartenelementoberfläche (3, S11);
Anordnen eines Stempelelements (10) beabstandet von der Kartenelementoberfläche (3, S12);
Anordnen einer Magnetstreifenmaterialschicht (4) zwischen der Kartenelementoberfläche (3) und dem Stempelelement (10, S13);
Anordnen der Magnetstreifenmaterialschicht (4) zwischen einer Trägersubstratschicht (6) und einer wärmeaktivierbaren Substratschicht (7);
Pressen zumindest eines Abschnitts (4a) der Magnetstreifenmaterialschicht (4) gegen die Kartenelementoberfläche (3) unter Verwendung des Stempelelements (10, S14);
Anwenden einer Wärmemenge auf den Abschnitt (4a) der Magnetstreifenmaterialschicht (4) unter Verwendung des Stempelelements (10), wenn der Abschnitt (4a) der Magnetstreifenmaterialschicht (4) gegen die Kartenelementoberfläche (3, S15) gepresst wird;
wobei das Pressen des Abschnitts (4a) der Magnetstreifenmaterialschicht (4) gegen die Kartenelementoberfläche (3) einen Magnetstreifen (5) auf der Kartenelementoberfläche (3) erzeugt, so dass der Magnetstreifen (5) eine Streifenlänge (L₁) aufweist, die kleiner als eine Länge (L₂) der Kartenelementoberfläche (3) ist, und eine Streifenbreite (B₁) aufweist, die kleiner als eine Breite (B₂) der Kartenelementoberfläche (3) ist, und
wobei das Pressen des Abschnitts (4a) der Magnetstreifenmaterialschicht (4) gegen die Kartenelementoberfläche (3) das Pressen des Abschnitts (4a) der Magnetstreifenmaterialschicht (4) zusammen mit einem Abschnitt (6a) der Trägersubstratschicht (6) und einem Abschnitt (7a) der wärmeaktivierbaren Substratschicht (7) in Richtung der Kartenelementoberfläche (3) umfasst.

2. Verfahren nach Anspruch 1,
wobei das Pressen des Abschnitts (4a) der Magnetstreifenmaterialschicht (4) gegen die Kartenelementoberfläche (3) das Pressen nur des Abschnitts (4a) der Magnetstreifenmaterialschicht (4) umfasst, der einer Stempeloberfläche (11) des Stempelelements (10) zugewandt ist.

3. Verfahren nach einem der Ansprüche 1 oder 2,
wobei das Anwenden der Wärmemenge auf den Abschnitt (4a) der Magnetstreifenmaterialschicht (4) Aktivieren des Abschnitts (7a) der wärmeaktivierbaren Substratschicht (7) unter Verwendung des Stempelelements (10) umfasst, wodurch eine Haftung zwischen dem Abschnitt (4a) der Magnetstreifenmaterialschicht (4) und der Kartenelementoberfläche (3) bereitgestellt wird.

4. Verfahren nach einem der Ansprüche 1 bis 3,
wobei das Kartenelement (2) eine Deckschicht des kartenartigen Datenträgers (1) ist;
ferner umfassend:
Bereitstellen einer Grundstruktur, die eine oder mehrere strukturelle Grundschichten umfasst;
Anwenden des Kartenelements (2) auf die Grundstruktur vor oder nach dem Pressen des Abschnitts (4a) der Magnetstreifenmaterialschicht (4) gegen die Kartenelementoberfläche (3).

5. Verfahren zum Herstellen eines Magnetstreifens (5) eines kartenartigen Datenträgers (1), umfassend:
Bereitstellen eines Kartenelements (2) mit einer Kartenelementoberfläche (3, S21);
Anordnen eines Walzenelements (20) beabstandet von der Kartenelementoberfläche (3), wobei das Walzenelement (20) eine Mehrzahl von funktionalen Elementen (21) umfasst, die voneinander um einen Umfang (22) des Walzenelements (20, S22) beabstandet sind;
Anordnen einer Magnetstreifenmaterialschicht (4) zwischen der Kartenelementoberfläche (3) und dem Rollenelement (20, S23);
Anordnen der Magnetstreifenmaterialschicht (4) zwischen einer Trägersubstratschicht (6) und einer wärmeaktivierbaren Substratschicht (7);
Drehen des Walzenelements (20) relativ zu der Kartenelementoberfläche (3) und relativ zu der Magnetstreifenmaterialschicht (4, S24);
Pressen zumindest eines ersten Abschnitts (4a) der Magnetstreifenmaterialschicht (4) gegen die Kartenelementoberfläche (3) unter Verwendung eines ersten funktionalen Elements (21a) der Mehrzahl von funktionalen Elementen (21), wenn das Walzenelement (20, S25) gedreht wird;
Anwenden einer Wärmemenge auf den ersten Abschnitt (4a) der Magnetstreifenmaterialschicht (4) unter Verwendung des Walzenelements (20), wenn der erste Abschnitt (4a) der Magnetstreifenmaterialschicht (4) gegen die Kartenelementoberfläche (3, S26) gepresst wird;
wobei das Pressen des ersten Abschnitts (4a) der Magnetstreifenmaterialschicht (4) gegen die Kartenelementoberfläche (3) einen ersten Magnetstreifen (5) auf der Kartenelementoberfläche (3) erzeugt, so dass der erste Magnetstreifen (5) eine Streifenlänge (L₁) aufweist, die kleiner als eine Länge (L₂) der Kartenelementoberfläche (3) ist, und eine Streifenbreite (B₁) aufweist, die kleiner als eine Breite (B₂) der Kartenelementoberfläche (3) ist, und
wobei das Pressen des ersten Abschnitts (4a) der Magnetstreifenmaterialschicht (4) gegen die Kartenelementoberfläche (3) das Pressen des ersten Abschnitts (4a) der Magnetstreifenmaterialschicht (4) zusammen mit einem ersten Abschnitt (6a) der Trägersubstratschicht (6) und einem ersten Abschnitt (7a) der wärmeaktivierbaren Substratschicht (7) in Richtung der Kartenelementoberfläche (3) umfasst, und
wobei das Anwenden der Wärmemenge auf den ersten Abschnitt (4a) der Magnetstreifenmaterialschicht (4) das Aktivieren des ersten Abschnitts (7a) der wärmeaktivierbaren Substratschicht (7) unter Verwendung des Walzenelements (20) umfasst, wodurch eine Haftung zwischen dem ersten Abschnitt (4a) der Magnetstreifenmaterialschicht (4) und der Kartenelementoberfläche (3) bereitgestellt wird.

6. Verfahren nach Anspruch 5, ferner umfassend:
Pressen zumindest eines zweiten Abschnitts (4b) der Magnetstreifenmaterialschicht (4) gegen die Kartenelementoberfläche (3) unter Verwendung eines zweiten funktionalen Elements (21b) der Mehrzahl von funktionalen Elementen (21), wenn das Walzenelement (20) weiter gedreht wird; und/oder
Anwenden einer Wärmemenge auf den zweiten Abschnitt (4b) der Magnetstreifenmaterialschicht (4) unter Verwendung des Walzenelements (20), wenn der zweite Abschnitt (4b) der Magnetstreifenmaterialschicht (4) gegen die Kartenelementoberfläche (3) gepresst wird.

7. Verfahren nach Anspruch 6,
wobei das Pressen des zweiten Abschnitts (4b) der Magnetstreifenmaterialschicht (4) gegen die Kartenelementoberfläche (3) einen zweiten Magnetstreifen auf der Kartenelementoberfläche (3) erzeugt, so dass der zweite Magnetstreifen eine Streifenlänge (L₁) aufweist, die kleiner als eine Länge (L₂) der Kartenelementoberfläche (3) ist, und eine Streifenbreite (B₁) aufweist, die kleiner als eine Breite (B₁) der Kartenelementoberfläche (3) ist.

8. Verfahren nach Anspruch 7,
wobei der erste Magnetstreifen (5) und der zweite Magnetstreifen (5) auf der Kartenelementoberfläche (3) erzeugt werden, so dass der erste Magnetstreifen (5) und der zweite Magnetstreifen (5) voneinander auf der Kartenelementoberfläche (3) um einen vorbestimmten Abstand beabstandet sind, der einem Umfangsabstand zwischen den funktionalen Elementen (21) auf dem Walzenelement (20) entspricht.

9. Verfahren nach einem der Ansprüche 5 bis 8,
wobei das Kartenelement (2) eine Deckschicht des kartenartigen Datenträgers (1) ist;
ferner umfassend:
Bereitstellen einer Grundstruktur, die eine oder mehrere strukturelle Grundschichten umfasst;
Anwenden des Kartenelements (2) auf die Grundstruktur vor oder nach dem Pressen des ersten Abschnitts (4a) der Magnetstreifenmaterialschicht (4) gegen die Kartenelementoberfläche (3).

10. Verfahren zum Herstellen eines Magnetstreifens (5) eines kartenartigen Datenträgers (1), umfassend:
Bereitstellen eines Kartenelements (2) mit einer Kartenelementoberfläche (3, S31);
Anordnen eines Siebdruckelements relativ zu der Kartenelementoberfläche (3, S32);
Drucken eines Magnetstreifenmaterials (4) auf die Kartenelementoberfläche (3) unter Verwendung des Siebdruckelements (S33);
wobei das Drucken des Magnetstreifenmaterials (4) auf die Kartenelementoberfläche (3) einen Magnetstreifen (5) auf der Kartenelementoberfläche (3) erzeugt, so dass der Magnetstreifen (5) eine Streifenlänge (L₁) aufweist, die kleiner als eine Länge (L₂) der Kartenelementoberfläche (3) ist, und eine Streifenbreite (B₁) aufweist, die kleiner als eine Breite (B₂) der Kartenelementoberfläche (3) ist,
wobei eine Schablone verwendet wird, um eine Form des Magnetstreifens (5) auf der Kartenelementoberfläche (3) zu definieren, und
wobei die Schablone angepasst ist, um zu verhindern, dass das Magnetstreifenmaterial (4) auf bestimmte Bereiche auf der Kartenelementoberfläche (3) angewendet wird.

11. Verfahren nach Anspruch 10,
wobei das Kartenelement (2) eine Deckschicht des kartenartigen Datenträgers (1) ist;
ferner umfassend:
Bereitstellen einer Grundstruktur, die eine oder mehrere strukturelle Grundschichten umfasst;
Anwenden des Kartenelements (2) auf die Grundstruktur vor oder nach dem Drucken des Magnetstreifenmaterials (4) auf die Kartenelementoberfläche (3), wodurch eine laminierte Struktur von mindestens dem Kartenelement (2) und der Grundstruktur bereitgestellt wird.

12. Verfahren nach Anspruch 11,
Schneiden der laminierten Struktur auf eine vorbestimmte Größe, um den kartenartigen Datenträger (1) bereitzustellen.

13. Verfahren zum Herstellen eines Magnetstreifens (5) eines kartenartigen Datenträgers (1), umfassend:
Bereitstellen eines Kartenelements (2) mit einer Kartenelementoberfläche (3, S41);
Anordnen eines Bandaufbringungselements relativ zu der Kartenelementoberfläche (3, S42);
Bereitstellen eines Bandelements, das mindestens eine Magnetstreifenmaterialschicht (4, S43) umfasst;
Befestigen des Bandelements einschließlich der Magnetstreifenmaterialschicht (4) auf der Kartenelementoberfläche (3) unter Verwendung des Bandaufbringungselements (S44);
wobei das Befestigen des Bandelements einschließlich der Magnetstreifenmaterialschicht (4) auf der Kartenelementoberfläche (3) einen Magnetstreifen (5) auf der Kartenelementoberfläche (3) erzeugt, so dass der Magnetstreifen (5) eine Streifenlänge (L₁) aufweist, die kleiner als eine Länge (L₂) der Kartenelementoberfläche (3) ist, und eine Streifenbreite (B₁) aufweist, die kleiner als eine Breite (B₂) der Kartenelementoberfläche (3) ist,
wobei das Befestigen des Bandelements einschließlich der Magnetstreifenmaterialschicht (4) auf der Kartenelementoberfläche (3) Bereitstellen einer Haftung zwischen der Magnetstreifenmaterialschicht (4) und der Kartenelementoberfläche (3) umfasst.

## Revendications

1. Procédé de fabrication d'une bande magnétique (5) d'un support de données de type carte (1), comprenant :
la fourniture d'un élément de carte (2) présentant une surface d'élément de carte (3, S11) ;
l'agencement d'un élément d'estampage (10) espacé de la surface d'élément de carte (3, S12) ;
l'agencement d'une couche de matériau de bande magnétique (4) entre la surface d'élément de carte (3) et l'élément d'estampage (10, S13) ;
l'agencement de la couche de matériau de bande magnétique (4) entre une couche de substrat de support (6) et une couche de substrat activable par la chaleur (7) ;
le pressage d'au moins une partie (4a) de la couche de matériau de bande magnétique (4) contre la surface d'élément de carte (3) à l'aide de l'élément d'estampage (10, S14) ;
l'application d'une quantité de chaleur sur la partie (4a) de la couche de matériau de bande magnétique (4) à l'aide de l'élément d'estampage (10), lors du pressage de la partie (4a) de la couche de matériau de bande magnétique (4) contre la surface d'élément de carte (3, S15) ;
dans lequel le pressage de la partie (4a) de la couche de matériau de bande magnétique (4) contre la surface d'élément de carte (3) génère une bande magnétique (5) sur la surface d'élément de carte (3) de sorte que la bande magnétique (5) présente une longueur de bande (L₁) qui est inférieure à une longueur (L₂) de la surface d'élément de carte (3) et présente une largeur de bande (B₁) qui est inférieure à une largeur (B₂) de la surface d'élément de carte (3), et
dans lequel le pressage de la partie (4a) de la couche de matériau de bande magnétique (4) contre la surface d'élément de carte (3) comprend le pressage de la partie (4a) de la couche de matériau de bande magnétique (4) ensemble avec une partie (6a) de la couche de substrat de support (6) et une partie (7a) de la couche de substrat activable par la chaleur (7) vers la surface d'élément de carte (3).

2. Procédé selon la revendication 1,
dans lequel le pressage de la partie (4a) de la couche de matériau de bande magnétique (4) contre la surface d'élément de carte (3) comprend le pressage uniquement de la partie (4a) de la couche de matériau de bande magnétique (4) qui fait face à une surface d'estampage (11) de l'élément d'estampage (10).

3. Procédé selon l'une quelconque des revendications 1 et 2,
dans lequel l'application de la quantité de chaleur sur la partie (4a) de la couche de matériau de bande magnétique (4) comprend l'activation de la partie (7a) de la couche de substrat activable par la chaleur (7) à l'aide de l'élément d'estampage (10), fournissant ainsi une adhérence entre la partie (4a) de la couche de matériau de bande magnétique (4) et la surface d'élément de carte (3).

4. Procédé selon l'une quelconque des revendications 1 à 3,
dans lequel l'élément de carte (2) est une couche de recouvrement du support de données de type carte (1) ;
comprenant en outre :
la fourniture d'une structure de base comprenant une ou plusieurs couches de base structurelles ;
l'application de l'élément de carte (2) à la structure de base avant ou après le pressage de la partie (4a) de la couche de matériau de bande magnétique (4) contre la surface d'élément de carte (3).

5. Procédé de fabrication d'une bande magnétique (5) d'un support de données de type carte (1), comprenant :
la fourniture d'un élément de carte (2) présentant une surface d'élément de carte (3, S21) ;
l'agencement d'un élément de roulement (20) espacé de la surface d'élément de carte (3), dans lequel l'élément de roulement (20) comprend une pluralité d'éléments fonctionnels (21) espacés les uns des autres autour d'une circonférence (22) de l'élément de roulement (20, S22) ;
l'agencement d'une couche de matériau de bande magnétique (4) entre la surface d'élément de carte (3) et l'élément de roulement (20, S23) ;
l'agencement de la couche de matériau de bande magnétique (4) entre une couche de substrat de support (6) et une couche de substrat activable par la chaleur (7) ;
la rotation de l'élément de roulement (20) par rapport à la surface d'élément de carte (3) et par rapport à la couche de matériau de bande magnétique (4, S24) ;
le pressage d'au moins une première partie (4a) de la couche de matériau de bande magnétique (4) contre la surface d'élément de carte (3) à l'aide d'un premier élément fonctionnel (21a) de la pluralité d'éléments fonctionnels (21), lors de la rotation de l'élément de roulement (20, S25) ;
l'application d'une quantité de chaleur sur la première partie (4a) de la couche de matériau de bande magnétique (4) à l'aide de l'élément de roulement (20), lors du pressage de la première partie (4a) de la couche de matériau de bande magnétique (4) contre la surface d'élément de carte (3, S26) ;
dans lequel le pressage de la première partie (4a) de la couche de matériau de bande magnétique (4) contre la surface d'élément de carte (3) génère une première bande magnétique (5) sur la surface d'élément de carte (3) de sorte que la première bande magnétique (5) présente une longueur de bande (L₁) qui est inférieure à une longueur (L₂) de la surface d'élément de carte (3) et présente une largeur de bande (B₁) qui est inférieure à une largeur (B₂) de la surface d'élément de carte (3), et
dans lequel le pressage de la première partie (4a) de la couche de matériau de bande magnétique (4) contre la surface d'élément de carte (3) comprend le pressage de la première partie (4a) de la couche de matériau de bande magnétique (4) ensemble avec une première partie (6a) de la couche de substrat de support (6) et une première partie (7a) de la couche de substrat activable par la chaleur (7) vers la surface d'élément de carte (3), et
dans lequel l'application de la quantité de chaleur sur la première partie (4a) de la couche de matériau de bande magnétique (4) comprend l'activation de la première partie (7a) de la couche de substrat activable par la chaleur (7) à l'aide de l'élément de roulement (20), fournissant ainsi une adhérence entre la première partie (4a) de la couche de matériau de bande magnétique (4) et la surface d'élément de carte (3).

6. Procédé selon la revendication 5, comprenant en outre :
le pressage d'au moins une deuxième partie (4b) de la couche de matériau de bande magnétique (4) contre la surface d'élément de carte (3) à l'aide d'un deuxième élément fonctionnel (21b) de la pluralité d'éléments fonctionnels (21), lors de la rotation supplémentaire de l'élément de roulement (20) ; et/ou
l'application d'une quantité de chaleur sur la deuxième partie (4b) de la couche de matériau de bande magnétique (4) à l'aide de l'élément de roulement (20), lors du pressage de la deuxième partie (4b) de la couche de matériau de bande magnétique (4) contre la surface d'élément de carte (3).

7. Procédé selon la revendication 6,
dans lequel le pressage de la deuxième partie (4b) de la couche de matériau de bande magnétique (4) contre la surface d'élément de carte (3) génère une deuxième bande magnétique sur la surface d'élément de carte (3) de sorte que la deuxième bande magnétique présente une longueur de bande (L₁) qui est inférieure à une longueur (L₂) de la surface d'élément de carte (3) et présente une largeur de bande (B₁) qui est inférieure à une largeur (B₂) de la surface d'élément de carte (3).

8. Procédé selon la revendication 7,
dans lequel la première bande magnétique (5) et la deuxième bande magnétique (5) sont générées sur la surface d'élément de carte (3) de sorte que la première bande magnétique (5) et la deuxième bande magnétique (5) soient espacées l'une de l'autre sur la surface d'élément de carte (3) d'une distance prédéterminée correspondant à une distance circonférentielle entre les éléments fonctionnels (21) sur l'élément de roulement (20).

9. Procédé selon l'une quelconque des revendications 5 à 8,
dans lequel l'élément de carte (2) est une couche de recouvrement du support de données de type carte (1) ;
comprenant en outre :
la fourniture d'une structure de base comprenant une ou plusieurs couches de base structurelles ;
l'application de l'élément de carte (2) à la structure de base avant ou après le pressage de la première partie (4a) de la couche de matériau de bande magnétique (4) contre la surface d'élément de carte (3).

10. Procédé de fabrication d'une bande magnétique (5) d'un support de données de type carte (1), comprenant :
la fourniture d'un élément de carte (2) présentant une surface d'élément de carte (3, S31) ;
l'agencement d'un élément de sérigraphie par rapport à la surface d'élément de carte (3, S32) ;
l'impression d'un matériau de bande magnétique (4) sur la surface d'élément de carte (3) à l'aide de l'élément de sérigraphie (S33) ;
dans lequel l'impression du matériau de bande magnétique (4) sur la surface d'élément de carte (3) génère une bande magnétique (5) sur la surface d'élément de carte (3) de sorte que la bande magnétique (5) présente une longueur de bande (L₁) qui est inférieure à une longueur (L₂) de la surface d'élément de carte (3) et présente une largeur de bande (B₁) qui est inférieure à une largeur (B₂) de la surface d'élément de carte (3),
dans lequel un pochoir est utilisé pour définir une forme de bande magnétique (5) sur la surface d'élément de carte (3), et
dans lequel le pochoir est adapté pour empêcher l'application du matériau de bande magnétique (4) à certaines régions sur la surface d'élément de carte (3).

11. Procédé selon la revendication 10,
dans lequel l'élément de carte (2) est une couche de recouvrement du support de données de type carte (1) ;
comprenant en outre :
la fourniture d'une structure de base comprenant une ou plusieurs couches de base structurelles ;
l'application de l'élément de carte (2) à la structure de base avant ou après l'impression de la couche de matériau de bande magnétique (4) sur la surface d'élément de carte (3), fournissant ainsi une structure stratifiée d'au moins l'élément de carte (2) et la structure de base.

12. Procédé selon la revendication 11, comprenant en outre
le découpage de la structure stratifiée à une taille prédéterminée pour fournir le support de données de type carte (1).

13. Procédé de fabrication d'une bande magnétique (5) d'un support de données de type carte (1), comprenant :
la fourniture d'un élément de carte (2) présentant une surface d'élément de carte (3, S41) ;
l'agencement d'un élément d'application de ruban adhésif par rapport à la surface d'élément de carte (3, S42) ;
la fourniture d'un élément de ruban adhésif qui comprend au moins une couche de matériau de bande magnétique (4, S43) ;
la fixation de l'élément de ruban adhésif incluant la couche de matériau de bande magnétique (4) sur la surface d'élément de carte (3) à l'aide de l'élément d'application de ruban adhésif (S44) ;
dans lequel la fixation de l'élément de ruban adhésif incluant la couche de matériau de bande magnétique (4) sur la surface d'élément de carte (3) génère une bande magnétique (5) sur la surface d'élément de carte (3) de sorte que la bande magnétique (5) présente une longueur de bande (L₁) qui est inférieure à une longueur (L₂) de la surface d'élément de carte (3) et présente une largeur de bande (B₁) qui est inférieure à une largeur (B₂) de la surface d'élément de carte (3),
dans lequel la fixation de l'élément de ruban adhésif incluant la couche de matériau de bande magnétique (4) sur la surface d'élément de carte (3) comprend la fourniture d'une adhérence entre la couche de matériau de bande magnétique (4) et la surface d'élément de carte (3).
